**Europäisches Patentamt**

(19) **European Patent Office**

**Office européen des brevets**

(11) Veröffentlichungsnummer: **0 096 100**
**B1**

(12) **EUROPÄISCHE PATENTSCHRIFT**

(45) Veröffentlichungstag der Patentschrift:
**19.02.86**

(21) Anmeldenummer: **82105287.5**

(22) Anmeldetag: **16.06.82**

(51) Int. Cl.⁴: **F 16 B 12/20**

(54) . **Verbindungsbeschlag.**

(43) Veröffentlichungstag der Anmeldung:
**21.12.83 Patentblatt 83/51**

(45) Bekanntmachung des Hinweises auf die Patenterteilung:
**19.02.86 Patentblatt 86/8**

(84) Benannte Vertragsstaaten:
**AT DE FR GB IT SE**

(56) Entgegenhaltungen:
**AT - B - 357 290**
**DE - U - 1 614 832**
**DE - U - 7 036 749**

(73) Patentinhaber: **Arturo Salice S.p.A., Via Provinciale Novedratese 10, I-22060 Novedrate (Como) (IT)**

(72) Erfinder: **Der Erfinder hat auf seine Nennung verzichtet**

(74) Vertreter: **Lorenz, Eduard et al, Rechtsanwälte Lorenz, Eduard - Seidler, Bernhard Seidler, Margrit - Gossel, Hans-K. Philipps, Ina, Dr. Widenmayerstrasse 23, D-8000 München 22 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

ACTORUM AG

## Beschreibung

Die Erfindung betrifft einen Verbindungsbeschlag zum lösbaren Verbinden zweier, vorzugsweise rechtwinkelig aufeinanderstossender plattenförmiger Möbelteile, bestehend aus zwei jeweils an einem der zu verbindenden Möbelteile befestigbaren Beschlagteilen, von denen einer einen gegen die Kraft einer Feder schwenkbar gelagerten Rasthebel aufweist, der an seinem vorderen Ende einen hakenförmigen Rastvorsprung trägt, der nach Einschieben des Rasthebels in eine Öffnung des anderen Beschlagteils mit seiner rückwärtigen Flanke, deren radialer Abstand zu der Schwenkachse des Rasthebels sich in Richtung auf deren Grund hin ständig verringert, hinter eine mit einer Abstützkante versehene Stufe oder Leiste des anderen Beschlagteils einschnappt, wobei die Flanke in ihrem verrasteten Zustand oberhalb ihres Grundes auf der Abstützkante aufliegt. Aus der nicht vorveröffentlichten EP-A Nr. 58220, veröffentlicht 25. 08. 82, ist ein Verbindungsbeschlag dieser Art bekannt, mit dem sich Möbelteile in einfacher Weise ohne Werkzeug dadurch zusammenbauen lassen, dass die Beschlagteile zusammengefügt werden, bis der Rastvorsprung des Rasthebels hinter die Abstützkante schnappt und die Beschlagteile selbstspannend zusammenzieht. Die selbstspannende Wirkung ergibt sich daraus, dass die Flanke unter leichter Schrägstellung mit kleinem Keilwinkel an der Abstützkante angreift, so dass unter der Wirkung der den Rasthebel belastenden Feder die Beschlagteile miteinander verspannt werden. Die leichte Schrägstellung der rückwärtigen Flanke des hakenförmigen Teils des Rasthebels ergibt sich aus der Anordnung des Gelenkbolzens des Rasthebels, die so zu wählen ist, das sich bezogen auf den Abstützpunkt an der Abstützkante der radiale Abstand der Flanke zur Schwenkachse des Rasthebels in Auflaufrichtung der Abstützkante auf die Flanke ständig geringfügig verringert. Um die selbstspannende Wirkung aufrechtzuerhalten, muss dabei im verrasteten Zustand der Beschlagteile zwischen dem Abstützpunkt der Flanke an der Abstützkante und dem Grund oder Ende der Flanke an dem Rasthebel ein Freiraum verbleiben, damit jegliches Spiel zwischen den Beschlagteilen oder den durch diese verbundenen Möbelteilen durch weiteres Abrutschen der Flanke auf der Abstützkante verhindert wird.

Der bekannte Verbindungsbeschlag hat sich bereits hervorragend bewährt. Es kann bei diesem allerdings dadurch zu Montageschwierigkeiten kommen, dass die Beschlagteile nicht mit genügender Genauigkeit an den miteinander zu verbindenden Möbelteilen befestigt werden, so dass sich die Beschlagteile nicht unmittelbar aufeinander abstützen, sondern auf den Möbelteilen, oder sich die Möbelteile aufeinander abstützen, und die rückwärtigen Flanken der Rastvorsprünge wegen eines zu grossen Abstandes der Beschlagteile voneinander nicht mehr hinter die Abstützkanten schnappen können, sondern die Rastvorsprünge auf den Abstützkanten aufliegen, ohne hinter diese zu greifen. Die bekannten Verbindungsbeschläge machen eine ziemlich genaue Befestigung der Beschlagteile an den miteinander zu verbindenden Möbelteilen erforderlich, weil nur Toleranzen durch den Verbindungsbeschlag ausgeglichen werden können, die innerhalb der Grenzen der schräggestellten rückwärtigen Flanke des Rastvorsprungs liegen.

Aufgabe der Erfindung ist es daher, den bekannten Verbindungsbeschlag derart zu verbessern, dass er auch bei grösseren Ungenauigkeiten der Befestigung der Beschlagteile an den miteinander zu verbindenden Möbelteilen noch voll funktionsfähig bleibt.

Erfindungsgemäss wird diese Aufgabe in einer ersten Ausführungsform dadurch gelöst, dass zwei, oder auch mehr als zwei zueinander parallele federbelastete Rasthebel vorgesehen sind und dass die Flanken der Rastvorsprünge der Rasthebel unterschiedlich grosse radiale Abstände von deren gemeinsamer Schwenkachse aufweisen. Werden die an den Möbelteilen befestigten Beschlagteile des erfindungsgemässen Verbindungsbeschlages zusammengeschoben, schnappt zunächst der Rastvorsprung mit der Flanke hinter die Abstützkante, die den grösseren radialen Abstand von der gemeinsamen Schwenkachse der Rasthebel aufweist. Durch den Rasthebel mit der Flanke mit grösserem radialen Abstand können also grössere Montageungenauigkeiten ausgeglichen werden. Sind die Beschlagteile mit grösserer Genauigkeit an den miteinander zu verbindenden Möbelteilen befestigt worden, schnappt auch der Rastvorsprung des anderen Rasthebels mit seiner Flanke mit geringerem radialen Abstand von der gemeinsamen Schwenkachse hinter die Abstützkante und bewirkt die selbstspannende Verbindung der Beschlagteile, während sich der erste Rasthebel lediglich noch auf die Abstützkante abstützt, ohne dass deren Flanke noch an der Abstützkante anliegt.

Zweckmässigerweise greift die Flanke mit geringerem radialem Abstand des Rastvorsprungs des einen Rasthebels gerade hinter die Abstützkante, bevor die Flanke mit grösserem radialem Abstand des Rastvorsprungs des anderen Rasthebels mit ihrem Grund, also dem an die Flanke angrenzenden Teil des Rasthebels, auf die Abstützkante stösst. Die beiden Flanken überlappen einander also in ihrer selbstspannenden Wirkung, so dass grössere Montageungenauigkeiten ausgeglichen werden können.

Da die beiden Rasthebel unabhängig voneinander abgefedert werden müssen, ist in weiterer Ausgestaltung der Erfindung vorgesehen, dass die Rasthebel auf den gegeneinander weisenden Schenkeln einer bügelförmigen Feder aus Federdraht oder Blattfederstreifen abgestützt sind, deren quer zu den Rasthebeln verlaufender Steg in dem Gehäuse abgestützt ist. Es braucht also nur eine Feder vorgesehen zu werden, weil diese zwei unabhängig voneinander federnde Schenkel aufweist, die jeweils einen der Rasthebel federnd abstützen.

Eine zweite Lösung der gestellten Aufgabe sieht erfindungsgemäss vor, dass die Abstützkante durch die Stirnseite eines kragenförmigen Randes einer drehbar in dem Gehäuse des Beschlagteils quer zur Schwenkebene des Rasthebels gelagerten Scheibe gebildet ist, dessen Höhe über der Scheibe sich kontinuierlich verändert. Vermag infolge von Montageungenauigkeiten der Rasthebel mit seinem hakenförmigen Rastvorsprung nicht in der Weise hinter die durch den Kragen gebildete Abstützkante mit seiner spannenden Flanke zu greifen, ist lediglich die Scheibe derart zu drehen, dass ein Teil des kragenförmigen Randes mit geringerer Höhe über der Scheibe die Abstützkante bildet. Der kragenförmige Rand kann durch einen zylindrischen oder kegelstumpfförmigen Randstreifen gebildet sein.

Zweckmässigerweise ist die kreisförmige Scheibe nur über einen Teil ihres Umfangs mit einem Kragen versehen, dessen Höhe sich von seiner einen Seite zur anderen ständig verringert.

Die Scheibe kann in einer zylindrischen Ausnehmung des Gehäuses drehbar gelagert sein. Um die Scheibe in einfacher Weise verdrehen zu können, kann der Boden der zylindrischen Ausnehmung in dem Gehäuse des Beschlagteils mit einem mittigen Loch versehen sein, in dem ein zentraler Schraubenzieherschlitz der Scheibe liegt. Auf diese Weise kann die Scheibe leicht mit einem Schraubenzieher in eine Stellung gedreht werden, in der der kragenförmige Rand selbstspannend von der rückwärtigen Flanke des Rastvorsprungs des Rasthebels übergriffen wird.

Um den Drehwinkel der Scheibe zu begrenzen, kann die zylindrische Ausnehmung im Gehäuse mit seitlichen Anschlägen für die seitlichen Ränder des sektorförmigen Kragens versehen sein.

Ausführungsbeispiele der Erfindung werden nachstehend anhand der Zeichnung näher beschrieben. In dieser zeigt

Fig. 1 einen Schnitt durch einen zwei winkelig aufeinanderstossende plattenförmige Möbelteile verbindenden Verbindungsbeschlag, bei dem der Rasthebel mit der Flanke mit geringerem radialem Abstand von der Schwenkachse an der aus einem Bolzen bestehenden Abstützkante spannend angreift,

Fig. 2 eine perspektivische Darstellung der Rasthebel, des Gelenkbolzens, der die Rasthebel belastenden bügelförmigen Feder und der aus einem mit Riefen versehenen Bolzen bestehenden Abstützkante, teilweise in auseinandergezogenem Zustand,

Fig. 3 einen der Fig. 1 entsprechenden Schnitt durch den Verbindungsbeschlag, bei dem der Rasthebel mit der Flanke mit grösserem radialem Abstand von der Schwenkachse an der Abstützkante spannend angreift,

Fig. 4 einen Schnitt durch einen zwei winkelig aufeinanderstossende plattenförmige Möbelteile verbindenden Verbindungsbeschlag anderer Ausführungsform,

Fig. 5 eine Vorderansicht des Beschlagteils nach Fig. 4 mit scheibenförmiger Abstützkante unterschiedlicher Höhe, teilweise im Schnitt,

Fig. 6 eine Seitenansicht der die Abstützkante bildenden Scheibe mit kragenförmigem Rand,

Fig. 7 eine Vorderansicht der Scheibe nach Fig. 6,

Fig. 8 eine schematische Darstellung des Verbindungsbeschlages nach den Fig. 1 bis 3,

Fig. 9 eine grafische Darstellung der zulässigen Toleranzen in Abhängigkeit von dem Schwenkwinkel der Rasthebel des Verbindungsbeschlages nach Fig. 8,

Fig. 10 eine schematische Darstellung des Verbindungsbeschlages nach den Fig. 4 bis 7, und

Fig. 11 eine grafische Darstellung der ausgleichbaren Toleranzen in Abhängigkeit von dem Schwenkwinkel des Rasthebels.

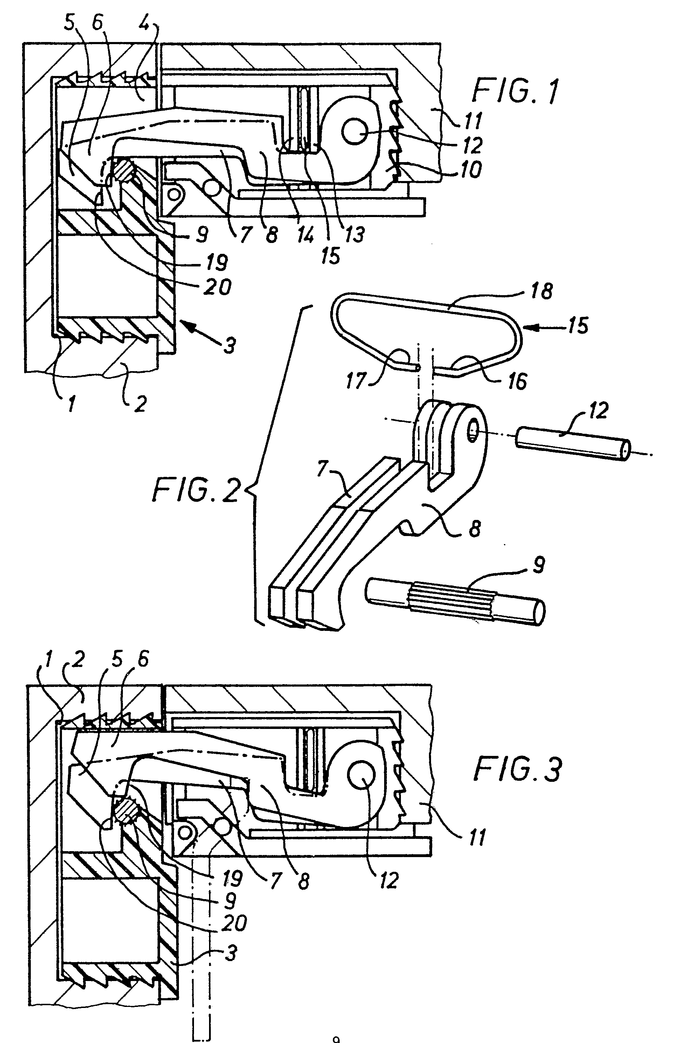

Bei der Ausführungsform des Verbindungsbeschlages nach den Fig. 1 bis 3 ist das in das eingefräste Sackloch 1 der vertikalen Möbelwand 2 eingesetzte topfförmige Beschlagteil 3 mit einer im Querschnitt etwa rechteckigen Einschuböffnung 4 für die beiden, Haken 5, 6 tragenden Verrastungshebel 7, 8 versehen. Die Unterseite der Einschuböffnung 4 steigt keilförmig bis zu dem die Abstützkante bildenden Bolzen 9 an, der in den Seitenwandungen des topfförmigen Beschlagteils 3 befestigt ist. Hinter dem Bolzen 9 fällt die Unterseite der Einschuböffnung 4 unter Bildung einer Stufe steil ab. Der Bolzen 9 ist an der hinteren Kante der Stufe angeordnet und bildet dadurch eine Abstütz- oder Rastkante. Die Unterseite der Einschuböffnung 4 schliesst etwa tangential an den Mantel des Bolzens 9 an, während dieser die abfallende Seite der Stufe überragt. Der Bolzen 9 ist, wie aus Fig. 2 ersichtlich ist, in seinem mittleren Bereich mit axial verlaufenden Riefen versehen.

Die Rasthebel 7, 8 sind in dem ebenfalls topfförmigen Beschlagteil 10, das in einer ausgefrästen Bohrung des Möbelteils 11 befestigt ist, um den Gelenkbolzen 12 schwenkbar gelagert. Zwischen querverlaufenden Zwischenwandungen 13, 14 des Beschlagteils 10 ist eine aus Federdraht gebogene bügelförmige Feder 15 gehaltert, deren die Federschenkel 16, 17 verbindender Steg 18 auf der Bodenwandung des topfförmigen Gehäuses des Beschlagteils 10 abgestützt ist. Die gegeneinander gerichteten Schenkel 16, 17 der bügelförmigen Feder 15 stützen sich in Ausnehmungen jeweils auf einem der im geringen Abstand parallel zueinander angeordneten Rasthebel 7, 8 ab, so dass diese unabhängig voneinander federbelastet sind.

Die Rastvorsprünge 5, 6 der Rasthebel 7, 8 weisen rückwärtige Flanken 19, 20 auf, von denen die Punkte der Flanke 19 einen geringeren radialen Abstand zu der gemeinsamen Schwenkachse 12 aufweisen als die entsprechenden Punkte der Flanke 20.

Bei der Befestigung der Beschlagteile 3, 10 in den ausgefrästen Bohrungen der Möbelteile 2, 11 kann es beispielsweise dadurch zu unterschiedlichen Abständen der Beschlagteile relativ zueinander kommen, dass die Bohrung für das Beschlagteil 10 nicht den vorgesehenen Abstand zu der Vorderkante des Möbelteils 11 aufweist oder dass das Beschlagteil 3 zu tief in seine Bohrung eingedrückt wird.

Bei der Anordnung nach Fig. 1 weisen die beiden Beschlagteile 3, 10 den korrekten Abstand relativ zueinander auf, weil die aufeinanderstossenden Teile der Beschlagteile jeweils mit der Stirnkante des Möbelteils bzw. der Vorderseite fluchten. Bei dieser genauen Montage der Beschlagteile hintergreift die Flanke 19 des Vorsprungs 6 des Rasthebels 8 den die Abstützkante bildenden Bolzen 9.

Bei dem Beispiel nach Fig. 3 ist die Bohrung für das Beschlagteil 10 zu weit nach innen versetzt worden, so dass die Vorderkante des Beschlagteils 10 nicht mehr mit der Stirnkante des Möbelteils 11 fluchtet. Da durch diese ungenaue Montage der relative Abstand der Beschlagteile zueinander vergrössert ist, hintergreift die Flanke 20 des Rastvorsprungs 5 des Rasthebels 7 mit grösserem radialen Abstand den die Abstützkante bildenden Bolzen 9, so dass die Montageungenauigkeit ausgeglichen ist.

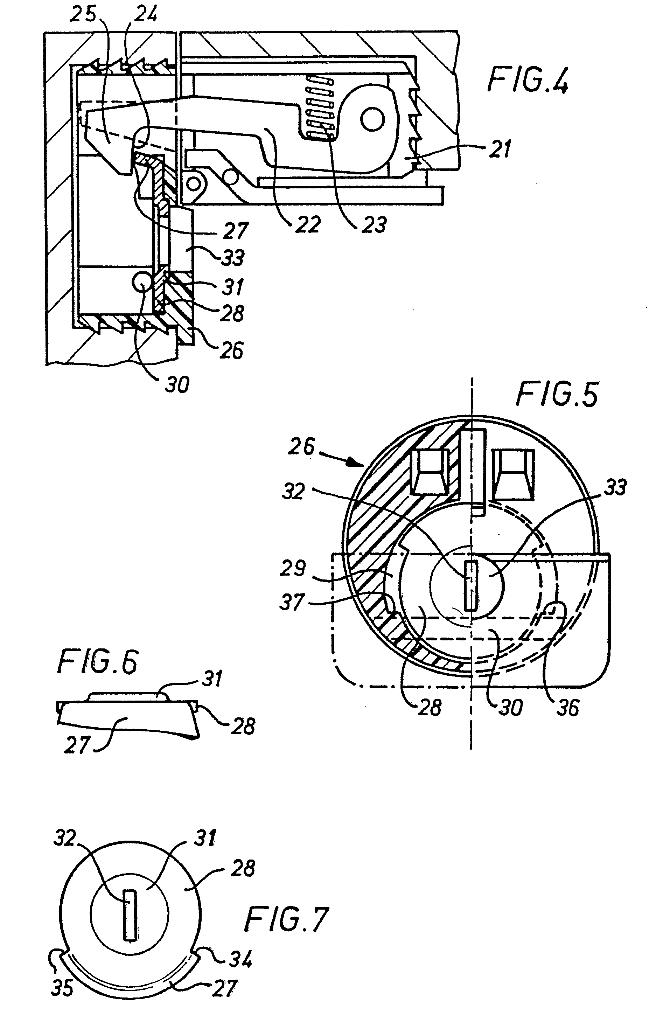

Das Ausführungsbeispiel nach den Fig. 4 bis 7 unterscheidet sich von dem nach den Fig. 1 bis 3 dadurch, dass in dem Beschlagteil 21 nur ein von der Schraubendruckfeder 23 federbelasteter Rasthebel 22 schwenkbar gelagert ist, der mit der Flanke 24 seines Rastvorsprungs 25 eine Abstützkante des Beschlagteils 26 im verrasteten Zustand hintergreift, die durch den hochgestellten Kragen 27 der in dem Beschlagteil 26 drehbar gelagerten Scheibe 28 gebildet ist. Die Scheibe 28 ist in einer im wesentlichen zylindrischen Ausnehmung 29 des Beschlagteils 26 drehbar gelagert und wird in dieser durch den diese stützenden Stift 30 gehalten. Die Scheibe 28 weist eine mittlere konzentrische Ausbuchtung 31 auf, die in einer entsprechenden Vertiefung des Gehäuses des Beschlagteils 26 liegt und gleichsam einen zentrierenden Achsstummel der Scheibe 28 bildet. Über den aus Fig. 7 ersichtlichen Sektor der Scheibe 28 ist diese mit einem kegelstumpfförmig hochstehenden Kragen 27 versehen, dessen Höhe über der Scheibe 28 in der aus Fig. 6 ersichtlichen Weise von seiner rechten Seite kontinuierlich zu seiner linken Seite hin abnimmt. Die Stirnseite des Kragens 27 bildet, wie aus Fig. 4 ersichtlich ist, die Abstützkante für die Flanke 24 des Rastvorsprungs 25 des Rasthebels 22.

Der mittlere Teil 31 der Scheibe 28 ist mit einem länglichen Schlitz 32 versehen, der eine Öffnung zum Einsatz eines Schraubenziehers bildet. Dieser Schraubenzieherschlitz 32 liegt innerhalb einer Bohrung oder eines Loches 33 in der vorderen Wandung des Beschlagteils 26. Sollte sich beim Zusammenfügen der Beschlagteile ergeben, dass der Rasthebel 22 mit seinem Rastvorsprung 26 nicht hinter den Kragen 27 einschnappt, kann dessen Höhe leicht dadurch verringert werden, dass die Scheibe 28 mit einem Schraubenzieher gedreht wird.

Die seitlichen Flanken 34, 35 des Kragens 27 bilden Anschläge, die sich zur Begrenzung des Drehwinkels der Scheibe 28 gegen stufenförmige Absätze 36, 37 in der zylindrischen Ausnehmung oder Vertiefung 29 des Gehäuses des Beschlagteils 26 anlegen können.

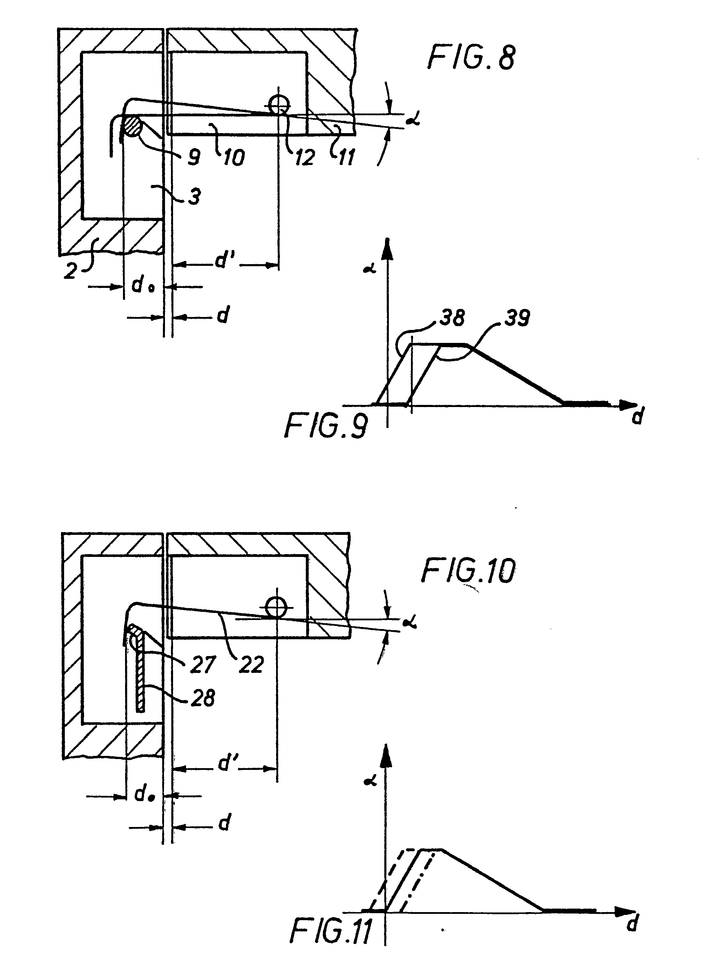

In Fig. 8 ist das Beschlagteil nach den Fig. 1 und 3 schematisch dargestellt. Fluchten die Ober- bzw. Stirnseiten der Beschlagteile jeweils mit den Ebenen der winkelig aufeinanderstossenden Möbelteile, ist die Montage der Beschlagteile exakt und keine Montageungenauigkeiten sind auszugleichen. Bei genauer Montage beträgt der Abstand der Vorderseite des Möbelteils 2 bis zur Rückseite des die Abstützkante bildenden Bolzens 9 d0, während der Abstand von der Mittellinie des Gelenkbolzens 12 bis zur Stirnkante des Möbelteils 11 d' beträgt. Bei Montageungenauigkeiten muss ein Spalt d ausgeglichen werden.

Aus dem Diagramm gemäss Fig. 9 ist ersichtlich, welche Spaltbreiten d infolge ungenauer Montage in Abhängigkeit von dem Schwenkwinkel α der Rasthebel ausgeglichen werden können. Die Gerade 38 entspricht der Spannstrecke der Flanke 19 des Rastvorsprungs 6 des Rasthebels 8, während die Gerade 39 die Spannstrecke der Flanke 20 des Rastvorsprungs 5 des Rasthebels 7 darstellt. Aus dem Diagramm ist ersichtlich, dass sich die Flanken in ihrer Spannwirkung überlappen und dass mit zwei Rasthebeln doppelt so grosse Fertigungsungenauigkeiten d ausgeglichen werden können wie nur mit einem Rasthebel.

In Fig. 10 ist der Verbindungsbeschlag nach den Fig. 4 bis 7 schematisch dargestellt. Hinsichtlich der Abstände d0 und d' sowie des auszugleichenden Spalts d entspricht die Fig. 10 der Fig. 8.

In Fig. 11 ist mit vollen Linien der von dem Rasthebel 22 übergreifbare Spalt d dargestellt, wenn sich die Scheibe 28 mit ihrem die Abstützkante bildenden Kragen 27 in der aus Fig. 5 ersichtlichen mittleren Stellung befindet. Mit gestrichelten und strichpunktierten Linien sind die Verhältnisse dargestellt, wenn die Flanke 24 des Rastvorsprungs 25 des Rasthebels 22 die linke oder rechte Seite des Kragens 27 übergreift.

## Patentansprüche

1. Verbindungsbeschlag zum lösbaren Verbinden zweier, vorzugsweise rechtwinkelig aufeinanderstossender plattenförmiger Möbelteile (2, 11), bestehend aus zwei jeweils an einem der zu verbindenden Möbelteile befestigbaren Beschlagteilen (3, 10), von denen einer einen gegen die Kraft einer Feder (15) schwenkbar gelagerten Rasthebel (7) aufweist, der an seinem vorderen Ende einen hakenförmigen Rastvorsprung (5) trägt, der nach Einschieben des Rasthebels in eine Öffnung (4) des anderen Beschlagteils mit seiner rückwärtigen Flanke (20), deren radialer Abstand zu der Schwenkachse (12) des Rasthebels sich in Richtung auf deren Grund hin ständig verringert, hinter eine mit einer Abstützkante (9) versehene Stufe oder Leiste des anderen Beschlagteils einschnappt, wobei die Flanke in ihrem verrasteten Zustand oberhalb ihres Grundes auf der Abstützkante aufliegt, dadurch gekennzeichnet, dass parallel zu diesem Rasthebel (7) mindestens ein weiterer federbelasteter Rasthebel (8) vorgesehen ist und dass die Flanken (19, 20) der Rastvorsprünge (5, 6) der Rasthebel (7, 8) unterschiedlich grosse radiale Abstände von deren gemeinsamer Schwenkachse (12) aufweisen.

2. Verbindungsbeschlag nach Anspruch 1, dadurch gekennzeichnet, dass die Flanke (19) mit geringerem radialem Abstand des Rastvorsprungs (6) des einen Rasthebels (8) gerade hinter die Abstützkante (9) greift, bevor die Flanke (20) mit grösserem radialem Abstand des Rastvorsprungs (5) des anderen Rasthebels (7) mit ihrem Grund auf die Abstützkante (9) stösst.

3. Verbindungsbeschlag nach Anspruch 1 oder 2, dadurch gekennzeichnet, dass die Rasthebel (7, 8) auf den gegeneinander weisenden und im Abstand voneinander endenden Schenkeln (16, 17) einer bügelförmigen Feder (15) aus Federdraht oder Blattfederstreifen abgestützt sind, deren quer zu den Rasthebeln (7, 8) verlaufender Steg (18) in dem Gehäuse des Beschlagteils (10) abgestützt ist.

4. Verbindungsbeschlag nach Anspruch 3, dadurch gekennzeichnet, dass die bügelförmige Feder (15) zwischen zwei zueinander parallelen Gehäusezwischenwandungen (13, 14) gehaltert ist.

5. Verbindungsbeschlag zum lösbaren Verbinden zweier, vorzugsweise rechtwinkelig aufeinanderstossender plattenförmiger Möbelteile, bestehend aus zwei jeweils an einem der zu verbindenden Möbelteile befestigbaren Beschlagteilen (21, 26), von denen einer einen gegen die Kraft einer Feder (23) schwenkbar gelagerten Rasthebel (22) aufweist, der an seinem vorderen Ende einen hakenförmigen Rastvorsprung (25) trägt, der nach Einschieben des Rasthebels in eine Öffnung des anderen Beschlagteils mit seiner rückwärtigen Flanke (24), deren radialer Abstand zu der Schwenkachse des Rasthebels sich in Richtung auf deren Grund hin ständig verringert, hinter eine mit einer Abstützkante versehene Stufe oder Leiste des anderen Beschlagteils einschnappt, wobei die Flanke in ihrem verrasteten Zustand oberhalb ihres Grundes auf der Abstützkante aufliegt, dadurch gekennzeichnet, dass die Abstützkante durch die Stirnseite eines hochgestellten Kragens (27) einer drehbar in dem Gehäuse des Beschlagteils (21) quer zur Schwenkebene des Rasthebels (22) gelagerten Scheibe (28) gebildet ist, dessen Höhe über der Scheibe (28) sich kontinuierlich ändert.

6. Verbindungsbeschlag nach Anspruch 5, dadurch gekennzeichnet, dass die kreisförmige Scheibe (28) nur über einen Teil ihres Umfangs mit dem Kragen (27) versehen ist, dessen Höhe sich von einer Seite zur anderen ständig verringert.

7. Verbindungsbeschlag nach Anspruch 5 oder 6, dadurch gekennzeichnet, dass die Scheibe (28) in einer zylindrischen Ausnehmung (29) des Gehäuses des Beschlagteils (26) drehbar gelagert und durch einen diese stützenden, quer verlaufenden Stift (30) od. dgl. gehalten ist.

8. Verbindungsbeschlag nach einem der Ansprüche 5 bis 7, dadurch gekennzeichnet, dass der Boden der zylindrischen Ausnehmung (29) mit einem mittigen Loch (33) versehen ist, in dem ein zentraler Schraubenzieherschlitz (32) der Scheibe (28) liegt.

9. Verbindungsbeschlag nach einem der Ansprüche 5 bis 8, dadurch gekennzeichnet, dass die zylindrische Ausnehmung (29) mit seitlichen Anschlägen (36, 37) für die seitlichen Ränder (34, 35) des sektorförmigen Kragens (27) versehen ist.

## Claims

1. A connecting fixture for releasably connecting two platelike furniture parts (2, 11), which preferably abut at right angles, which fixture consists of two fixture parts (3, 10), which are adapted to be secured to respective ones of the furniture parts to be connected and one of which is provided with a detent lever (7), which is mounted to be pivotally movable against the force of a spring (15) and at its forward end carries a hook-shaped detent projection (5), which has a rear side face (20), wherein the radial distance of which the pivot (12) of the detent lever decreases continuously toward the lower end thereof, wherein when the detent lever has been slidably inserted into an opening (4) of the other fixture part said side face snaps behind a step or ledge of the other fixture part, said step or ledge is provided with a backing edge (9), and said side face in its locked position lies above its lower end on the backing edge, characterized in that at least one additional spring-biased detent lever (8) is provided, which is parallel to the first-mentioned detent lever (7), and that the side faces (19, 20) of the detent projections (5, 6) of the detent levers (7, 8) are spaced different radial distances from their common pivot (12).

2. A connecting fixture according to Claim 1, characterized in that the side face (19) of the detent projection (6) of the one detent lever (8) is spaced a smaller radial distance and snaps behind the backing edge (9) just before the lower end of the side face (20) of the detent projection (5) of the other detent lever (7), which side face is spaced a larger radial distance, strikes against the backing edge (9).

3. A connecting fixture according to Claim 1 or 2, characterized in that the detent levers (7, 8) are supported on the legs (16, 17) of a U-shaped spring (15), which is made of spring wire or leaf spring strips and the legs of which extend toward each other and have spaced apart ends, whereas the web (18) of said spring extends transversely to the detent levers (7, 8) and is supported in the housing of the fixture part (10).

4. A connecting fixture according to Claim 3, characterized in that the U-shaped spring (15) is held between two parallel partitions (13, 14) provided in the housing.

5. A connecting fixture for releasably connecting two platelike furniture parts, which preferably abut at right angles, which fixture consists of two fixture parts (21, 26), one of which is provided with a detent lever (22), which is mounted to be pivotally movable against the force of a spring (23) and at its forward end carries a hook-shaped detent projection (25), which has a rear side face (24), the radial distance from which to the pivot of the detent lever decreases continuously toward the lower end of said side face, wherein said side face snaps behind a step or ledge of the other fixture part, said step or ledge is provided with a backing edge, and said side face in its locked position lies above its lower end on the backing edge, characterized in that the backing edge is constituted by the end face of an upstanding flange (27) of a disc (28), which is mounted in the housing of the fixture part (21) to be rotatable transversely to the plane in which the detent lever (22) is pivotally movable, and the height of said collar over the disc (28) changes continuously.

6. A connecting fixture according to Claim 5, characterized in that the circular disc (28) is provided with the flange (27) only along part of its periphery and the height of said flange decreases continuously from one side to the other.

7. A connecting fixture according to Claim 5 or 6, characterized in that the disc (28) is rotatably mounted in a cylindrical recess (29) of the housing of the fixture part (26) and is held by a transversely extending pin (30) or the like, which supports the disc.

8. A connecting fixture according to any of Claims 5 to 7, characterized in that the bottom of the cylindrical recess (29) is formed with a central hole (33), in which a central screwdriver slot (32) of the disc (28) is disposed.

9. A connecting fixture according to any of Claims 5 to 8, characterized in that the cylindrical recess (29) is provided with lateral stops (36, 37) associated with the side edges (34, 35) of the sector-shaped flange (27).


## Revendications

1. Dispositif de jonction pour l'assemblage amovible de deux éléments de meuble (2, 11) en forme de plaques se joignant en formant un angle, de préférence un angle droit, consistant en deux pièces de ferrure (3, 10) pouvant être fixées à chacun des éléments de meuble à raccorder, dont une est pourvue d'un levier d'encliquetage (7) qui s'appuie de manière pivotante contre la force d'un ressort (15) et qui, en son extrémité avant, porte une saillie d'encliquetage (5) en forme de crochet qui, après que le levier d'encliquetage a été poussé dans une ouverture (4) de l'autre pièce de ferrure, encliquette avec son flanc arrière (20) dont la distance radiale par rapport à l'axe de pivotement (12) du levier d'encliquetage diminue progressivement en direction du fond derrière une marche ou un listel pourvus d'une arête d'appui (9) de l'autre pièce de ferrure, le flanc reposant dans son état encliqueté au-dessus de son fond sur l'arête d'appui, caractérisé en ce qu'est prévu en plus du levier d'encliquetage (7) au moins un autre levier d'encliquetage (8) chargé par un ressort et que les flancs (19, 20) des saillies d'encliquetage (5, 6) des leviers d'encliquetage (7, 8) ont des distances radiales de différentes grandeurs par rapport à leur axe de pivotement commun (12).

2. Dispositif de jonction selon la revendication 1, caractérisé en ce que le flanc (19) ayant la saillie d'encliquetage (6) du levier d'encliquetage (8) avec la distance radiale plus petite s'engage directement derrière l'arête d'appui (9) avant que le flanc (20) ayant la saillie d'encliquetage (5) de l'autre levier d'encliquetage (7) avec la distance radiale plus grande heurte avec son fond l'arête d'appui (9).

3. Dispositif de jonction selon l'une des revendications 1 ou 2, caractérisé en ce que les leviers d'encliquetage (7, 8) s'appuient sur les côtés (16, 17) dirigés l'un vers l'autre et terminant de manière espacée d'un ressort (15) en forme d'étrier en fil de ressort ou bande de ressort à lame dont la traverse (18) disposée transversalement par rapport aux leviers d'encliquetage (7, 8) s'appuie dans le boîtier de la pièce de ferrure (10).

4. Dispositif de jonction selon la revendication 3, caractérisé en ce que le ressort (15) en forme d'étrier est tenu entre deux parois intermédiaires du boîtier (13, 14) disposées en parallèle.

5. Dispositif de jonction pour l'assemblage amovible de deux éléments de meuble en forme de plaques se joignant en formant un angle, de préférence un angle droit, consistant en deux pièces de ferrure (21, 26) pouvant être fixées à chacun des éléments de meuble à raccorder, dont une est pourvue d'un levier d'encliquetage (22) qui s'appuie de manière pivotante contre la force d'un ressort (23) et qui, en son extrémité avant, porte une saillie d'encliquetage (25) en forme de crochet qui, après que le levier d'encliquetage a été poussé dans une ouverture de l'autre pièce de ferrure, encliquette avec son flanc arrière (24) dont la distance radiale par rapport à l'axe de pivotement du levier d'encliquetage diminue progressivement en direction du fond derrière une marche ou un listel pourvus d'une arête d'appui de l'autre pièce de ferrure, le flanc reposant dans son état encliqueté au-dessus de son fond sur l'arête d'appui, caractérisé en ce que l'arête d'appui est formée par le côté avant d'une collerette relevée (27) d'un disque (28), disposée de manière à pouvoir pivoter transversalement par rapport au plan de pivotement du levier d'encliquetage (22) et de manière à être tournée dans le boîtier de la pièce de ferrure, la hauteur de la collerette au-dessus du disque (28) se modifiant continuellement.

6. Dispositif de jonction selon la revendication 5, caractérisé en ce que le disque circulaire (28) n'est pourvu que sur une partie de sa périphérie de la collerette dont la hauteur diminue constamment d'un côté vers l'autre.

7. Dispositif de jonction selon l'une des revendications 5 ou 6, caractérisé en ce que le disque (28) est disposé de manière pivotante dans une échancrure (29) cylindrique du boîtier de la pièce de ferrure (26) et est tenu par une goupille (30) ou un dispositif semblable disposé transversalement et appuyant le disque.

8. Dispositif de jonction selon l'une des revendications 5 à 7, caractérisé en ce que le fond de l'échancrure (29) cylindrique est pourvu d'un trou (33) au centre duquel est prévu une fente de tournevis (32) centrale du disque (28).

9. Dispositif de jonction selon l'une des revendications 5 à 8, caractérisé en ce que l'échancrure (29) cylindrique est pourvue de butées latérales (36, 37) pour les bords latéraux (34, 35) de la collerette (27) en forme de secteur.

FIG. 1

FIG. 2

FIG. 3

FIG.4

FIG.5

FIG.6

FIG.7

FIG.8

FIG.9

FIG.10

FIG.11